# EUROPÄISCHE PATENTANMELDUNG

(11) **EP 1 437 927 A2**
(43) Veröffentlichungstag der Anmeldung: **14.07.2004**
(21) Anmeldenummer: 03029603.2
(22) Anmeldetag: 22.12.2003
(51) Int. Cl.: H05B 37/02

(54) **Leuchte**

(30) Priorität: 03.01.2003 DE 20300022 U
(71) Anmelder: RIDI-LEUCHTEN GmbH, D-72417 Jungingen (DE)
(72) Erfinder: Martinetz, Johann, 72379 Hechingen-Stetten (DE)
(74) Vertreter: Heim, Hans-Karl, Dipl.-Ing.

(57) **Zusammenfassung**

Die Erfindung betrifft eine Leuchte, insbesondere eine Langfeldleuchte, mit einem Raumlichtsteuersystem. Damit bei Anwesenheit einer Person in einem Raum alle Leuchten des Raumes eingeschaltet werden und bleiben, auch wenn der Bewegungssensor nur einer Leuchte diese Person erfasst, ist die Leuchte mit zwei Sensorsystemen, welche unabhängig voneinander arbeiten, ausgerüstet. Für eine leitungsungebundene Kommunikation mehrerer Leuchten eines Raumes kann ein Infrarotsteuersystem oder ein Funksystem vorgesehen sein.

## Beschreibung

Die Erfindung betrifft eine Leuchte gemäß dem Oberbegriff des Anspruchs 1 und des Anspruchs 8.

Die Erfindung ist insbesondere für Langfeldleuchten mit einem Leuchtengehäuse, wenigstens einem Leuchtmittel und einem Lichtlenker bzw. Reflektoreinsatz in einer nach unten gerichteten Lichtaustrittsöffnung, welche von einem Leuchtenrand umgeben ist, geeignet.

Es sind Leuchten bekannt, welche einen Lichtsensor für die Beleuchtungsregelung entsprechend dem Tageslichtanteil, einen Bewegungssensor zum Lichtein- bzw. -ausschalten bei Personenanwesenheit bzw. -abwesenheit und einen Infrarotsensor (IR-Sensor) für die Steuerung der Beleuchtung mittels Infrarot-Fernbedienung aufweisen (EP 0 447 136 A2, DE 100 00 277 A1). Diese Leuchten werden auch als "intelligente" Leuchten bezeichnet.

Aus der EP 0 681 413 A2 ist eine Leuchte bekannt, welche eine Steuerung und eine oder mehrere Anwesenheitssensoren außerhalb der Leuchte aufweist. In der DE 299 18 578 U1 ist ein Steuerungssystem für die Beleuchtung eines Zimmers beschrieben, bei welchem eine Zwischenstation mit einem Sensor, welcher wahlweise in einem Detektionsmodus und einem Fernsteuermodus arbeiten kann, vorgesehen ist. In der DE 298 19 666 U1 ist eine Deckenleuchte mit einem Rauchmelder und/oder einem Gasmelder und/oder einem Bewegungsmelder beschrieben, welche zwei unterschiedlich helle Leuchtmittel aufweist. Über eine Fernbedienung, beispielsweise auf Basis der Infrarottechnik, kann je nach den Erfordernissen das hellere Leuchtmittel oder die schwächere Beleuchtung gewählt werden.

Aus der DE 196 01 489 A1 ist eine Leuchte mit einer Vorrichtung zum Steuern eines Leuchtmittels bekannt, welches ein Gehäuse mit einem Leuchtmittelsockel und einer Leuchtmittelfassung sowie eine den Leuchtmittelsockel und die Leuchtmittelfassung elektrisch verbindenden Steuereinrichtung aufweist. Die Steuereinrichtung ist zum gesteuerten Aktivieren des in der Leuchtmittelfassung aufgenommenen Leuchtmittels ausgebildet und weist einen Bewegungs- oder Anwesenheitsdetektor auf, der als ein auf Mikrowellenbasis arbeitender Radarsensor ausgebildet ist und innerhalb eines vorbestimmbaren Erfassungsbereichs reagiert. Alternativ wird der Bewegungssensor in einem separaten Gehäuse und batteriebetrieben angeordnet und an einer beliebigen Stelle befestigt. Der Funksignalempfänger ist dann Teil der Steuereinrichtung zum Aktivieren des Leuchtemittels.

Die bekannten Leuchten weisen den Nachteil auf, dass die eingebauten Sensor- und Infrarotlichtsteuersysteme nur mit Hilfe einer elektrischen Leitung miteinander kommunizieren können. Ohne eine derartige elektrische Verbindung zwischen den einzelnen Leuchten wird nur die Leuchte ein- bzw. ausgeschaltet, deren Bewegungssensor die An- bzw. Abwesenheit einer Person erfasst. Wenn mehrere Leuchten in einem Raum installiert sind und nur eine Leuchte durch die Anwesenheit einer Person aktiviert wird, schalten die übrigen Leuchten nicht ein bzw. nach einer einstellbaren Nachlaufzeit das Licht aus, obwohl sich die Person noch in dem Raum befindet.

Der Erfindung liegt die **Aufgabe** zugrunde, eine Leuchte mit einem Raumlichtsteuersystem zu schaffen, welches ohne zusätzliche elektrische Leitungen zwischen den einzelnen Leuchten eines Raumes eine Kommunikation der Leuchten miteinander ermöglicht, so dass bei Anwesenheit einer Person in einem Raum alle Leuchten dieses Raumes eingeschaltet werden und bleiben, auch wenn der Bewegungssensor nur einer Leuchte diese Person erfasst.

Erfindungsgemäß wird die Aufgabe durch die Merkmale des Anspruchs 1 und des Anspruchs 8 gelöst. Zweckmäßige und vorteilhafte Ausgestaltungen sind in den Unteransprüchen und in der Figurenbeschreibung enthalten.

Die Erfindung basiert auf dem Grundgedanken, eine Leuchte mit zwei Sensorsystemen, beispielsweise Infrarotlichtsteuersystemen, welche unabhängig voneinander arbeiten, auszurüsten.

Vorzugsweise in der Mitte eines nach unten in einen Raum gerichteten Leuchtenrandes werden ein Lichtsensor und Infrarotsensor zur Steuerung der elektronischen Leuchtmittelbetriebsgeräte in Abhängigkeit von dem Tageslichteinfall bzw. entsprechend dem Infrarotsignal einer Infrarot-Fernbedienung angeordnet.

Vorteilhafterweise sind die elektronischen Betriebsgeräte des Leuchtmittels dimmbar ausgebildet.

Ein zweites Steuersystem weist einen Bewegungs- bzw. Anwesenheitssensor und einen Infrarotsender auf, welche elektrisch verbunden sind. Der Infrarotsender sendet Infrarot-Ein-/Aus- und Dimmsignale aus und wird vom Anwesenheitssensor selbsttätig aktiviert.

Vorteilhafterweise werden bei einer Personenerkennung durch den Anwesenheitssensor von dem Infrarot-Sender ständig in Sekundenabstand Ein-/Aus-Signale ausgesendet. Diese Signale werden im Raum reflektiert und von dem Infrarotsensor der eigenen Leuchte, jedoch auch von den Infrarotsensoren der weiteren Leuchten in dem Raum erkannt und führen zur Aktivierung und Steuerung der Beleuchtung dieser Leuchten.

Der wesentliche Vorteil der erfindungsgemäß ausgestalteten Leuchten besteht somit darin, dass bei Personenanwesenheit, welche lediglich vom Bewegungssensor einer Leuchte detektiert werden kann, über die aktivierte IR-Strahlung dieser Leuchte und deren Reflexion die weiteren Leuchten eingeschaltet werden und alle Leuchten ausgeschaltet werden, wenn keine Person mehr in dem Raum ist. Das erfindungsgemäße Kommunikationssystem ist somit leitungsungebunden und vorteilhafterweise in Leuchten nachrüstbar.

Ein weiterer Vorteil besteht darin, dass das zweite Steuersystem mit dem Bewegungssensor und dem IR-Sender, welches auch als Anwesenheitssensorik verstanden werden kann, wechselseitig in einer der zwei stirnseitigen Randbereiche einer Leuchte und insbesondere lösbar angeordnet werden kann. Es ist dann vorteilhaft möglich, dass bei Anordnung mehrerer Leuchten, insbesondere Langfeldleuchten, in einem Raum die Anwesenheitssensorik wechselseitig an deren Stirnbereichen angeordnet und auch jederzeit in ihrer Anordnung ausgewechselt werden kann, damit die einzelnen Erfassungsbereiche der Leuchten den gesamten Raum abdecken.

Es liegt im Rahmen der Erfindung, anstelle eines Infrarotlichtsteuersystems ein Steuersystem mit alternativen Schaltsignalen zu verwenden. Beispielsweise kann eine Funksteuerung eingesetzt werden, um eine Leuchte bzw. mehrere Leuchten in einem Raum zu aktivieren bzw. zu deaktivieren. Anstelle eines IR-Sensors bzw. - Empfängers und eines IR-Senders können dann ein Funkempfänger und ein Funksender eingesetzt werden. Außerdem kann der Bewegungs- und/oder Anwesenheitssensor entsprechend ausgelegt sein.

Der Erfindung soll nachstehend anhand einer Zeichnung weiter erläutert werden; in dieser zeigen in einer stark schematisierten Darstellung
- Fig. 1: eine erfindungsgemäße Leuchte mit dem Sensoren-und Infrarotlichtsteuersystem;
- Fig. 2: einen vergrößerten Ausschnitt der Leuchte nach Fig. 1 mit einem Anwesenheitssensor und einem IR-Sender und
- Fig. 3: eine Prinzipdarstellung des erfindungsgemäßen leitungsungebundenen Kommunikationssystems für Leuchten in einem Raum.

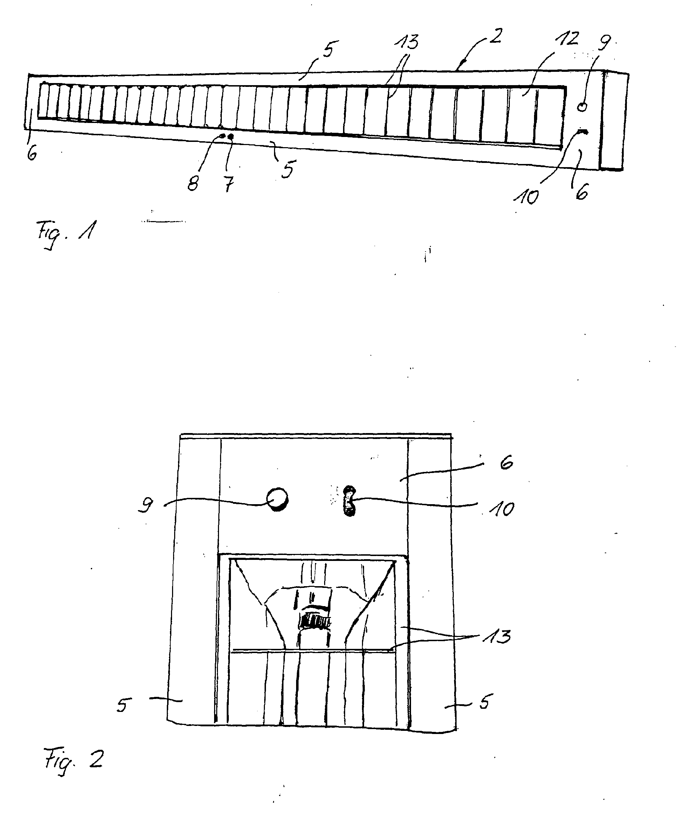

In Fig. 1 ist als Leuchte 2 eine Langfeldleuchte mit Sicht auf die Lichtaustrittsseite, welche im montierten Zustand der Leuchte nach unten gerichtet ist, dargestellt. Eine Lichtaustrittsöffnung 12 ist von längsseitigen Randbereichen 5 und stirnseitigen Randbereichen 6 begrenzt und mit einem Reflektoreinsatz 13 versehen. Beide stirnseitigen Randbereiche 6 sind zur Anordnung eines Anwesenheitssensors 9 und eines IR-Senders 10, welche ein erstes Steuersystem zur Steuerung dimmbarer elektronischer Betriebsgeräte (nicht dargestellt) der Leuchte 2 bilden, ausgebildet, wobei in Fig. 1 der Anwesenheitssensor 9 und IR-Senders 10 in dem rechten stirnseitigen Randbereich 6 angeordet sind.

Ein Lichtsensor 7 zur Steuerung der Beleuchtung in Abhängigkeit vom Tageslichteinfall und ein IR-Sensor bzw. -Empfänger 8, welcher zur Steuerung der Beleuchtung mit Hilfe einer IR-Fernbedienung dient, sind etwa mittig in einem der zwei längsseitigen Randbereiche 5 der Leuchte 2 angeordnet.

Der vergrößerte Ausschnitt des rechten stirnseitigen Randbereiches 6 in Fig. 2 zeigt den Anwesenheitssensor 9 und den IR-Sender 10, welche elektrisch miteinander verbunden sind. Der IR-Sender 9 weist Infrarotdioden auf, welche bei Personenerkennung durch den Bewegungssensor 9 ständig in Sekundenabstand Ein- und Aus-Signale aussenden.

Der IR-Sensor bzw. -Empfänger 8 und der Lichtsensor 7 mit einem Controller (nicht gezeigt) für die Steuerung der dimmbaren elektronischen Leuchtmittelbetriebsgeräte in Abhängigkeit von den Infrarotsignalen bzw. vom Tageslichteinfall sind etwa mittig im längsseitigen Randbereich 5 der Leuchte 2 (Fig. 1) angeordnet.

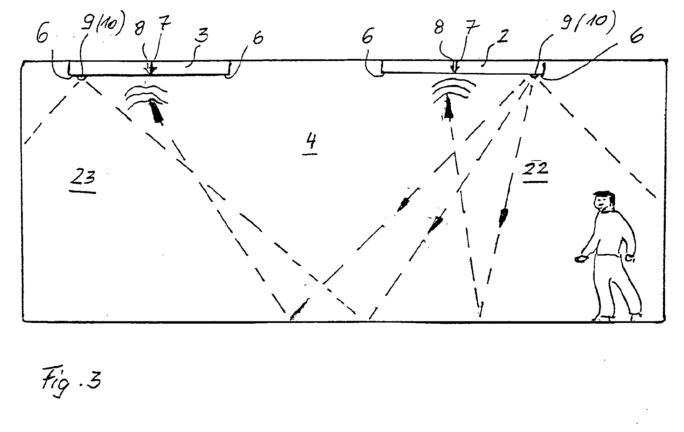

Fig. 3 zeigt beispielhaft einen Raum 4 mit zwei erfindungsgemäßen Leuchten 2, 3 und die leitungsungebundene Kommunikation dieser Leuchten 2, 3 bei Anwesenheit einer Person. Außerdem geht aus Fig. 3 die vorteilhafte Anordnung des Sensorsystems mit Anwesenheitssensor 9 und IR-Sender 10 wechselseitig in den stirnseitigen Randbereichen 6 der Leuchten 2, 3 hervor, wobei der IR-Sender 10 hinter dem Anwesenheitssensor 9 angeordnet ist.

Beide Leuchten 2, 3 sind in einem nach unten gerichteten, längsseitigen Randbereich 5 außerdem mit einem Lichtsensor 7 sowie mit einem IR-Sensor 8 zum Empfang von IR-Strahlen aus einem IR-Sender 10 versehen, wobei sie etwa mittig in dem längsseitigen Randbereich 5 angeordnet sind. Die Leuchte 2 ist im rechten stirnseitigen Randbereich 6 mit der Anwesenheitssensorik, bestehend aus dem Anwesenheitssensor 9 und IR-Sender 10 mit Controller, versehen, so dass eine Person im Erfassungsbereich 22 der Leuchte 2 erfasst und der IR-Sender 10 der Leuchte 2 aktiviert wird. Reflektierende IR-Strahlen dieses IR-Senders 10 gelangen zu dem IR-Sensor 8 der Leuchte 2 und auch zu dem IR-Sensor 8 der Leuchte 3, so dass auch diese Leuchte 3 aktiviert und angeschaltet wird, obwohl deren Bewegungssensor 9 die Person noch nicht detektieren konnte.

Analoges gilt für eine Person, welche nur vom Bewegungssensor 9 der Leuchte 3 im Erfassungsbereich 23 erfasst wird. Es wird dann der IR-Sender 10 der Leuchte 3 aktiviert, welcher ständig regelmäßige Ein/Aus-Signale bzw. IR-Strahlen aussendet. Der IR-Sensor 8 der Leuchte 3, aber auch der IR-Sensor 8 der Leuchte 2 erfassen dann die reflektierten Strahlen und aktivieren die Beleuchtung nicht nur der Leuchte 3, sondern auch der Leuchte 2.

Die erfindungsgemäßen Sensorsysteme der Leuchten 2, 3 ermöglichen somit eine leitungsungebundene Kommunikation in Raum 4. Die Anzahl der Leuchten in einem Raum und deren Ausbildung ist dabei unerheblich und kann variieren.

## Patentansprüche

1. Leuchte
mit einem Lichtsensor (7) zur Steuerung der Beleuchtung in Abhängigkeit vom Tageslichtanteil,
einem IR-Sensor (8) zur Steuerung der Beleuchtung mittels Fernbedienung und
einem Anwesenheitssensor (9) zum Ein- und Ausschalten der Leuchte (2, 3) bei Anwesenheit bzw. Abwesenheit einer Person,
**dadurch gekennzeichnet,**
**dass** zusätzlich ein IR-Sender (10) vorgesehen ist und
mit dem Anwesenheitssensor (9) in Wirkverbindung steht,
**dass** der IR-Sender (10) bei Personenerkennung durch den Anwesenheitssensor (9) zur Aussendung von Ein/Aus-Signalen ausgebildet ist und
**dass** durch diese Ein/Aus-Signale, welche nach Reflexion auf den IR-Sensor (8) der Leuchte (2) und den IR-Sensor (8) wenigstens einer weiteren Leuchte (3) treffen, die Beleuchtung der Leuchten (2, 3) zusätzlich steuerbar ist.

2. Leuchte nach Anspruch 1,
**dadurch gekennzeichnet,**
**dass** der Lichtsensor (7) und IR-Sensor (8) ein erstes Sensorsystem bilden und zur Steuerung dimmbarer elektronischer Betriebsgeräte der Leuchten (2, 3) angeordnet sind.

3. Leuchte nach Anspruch 1 oder 2,
**dadurch gekennzeichnet,**
**dass** das erste Steuersystem aus Lichtsensor (7) und IR-Sensor (8) etwa mittig in einem längsseitigen Randbereich (5) einer nach unten gerichteten Lichtaustrittsöffnung (12) der Leuchten (2, 3) eingebaut ist.

4. Leuchte nach einem der vorhergehenden Ansprüche,
**dadurch gekennzeichnet,**
**dass** der Anwesenheitssensor (9) und der IR-Sender (10) ein zweites Steuersystem bilden und jeweils in einem stirnseitigen Randbereich (6) der nach unten gerichteten Lichtaustrittsöffnung (12) der Leuchten (2, 3) eingebaut sind.

5. Leuchte nach einem der vorhergehenden Ansprüche,
**dadurch gekennzeichnet,**
**dass** der IR-Sender (10) bei Personenerkennung durch den Anwesenheitssensor (9) ständig im Sekundenabstand Ein/Aus-Signale aussendet.

6. Leuchte nach Anspruch 4 oder 5,
**dadurch gekennzeichnet,**
**dass** das zweite Sensorsystem mit Anwesenheitssensor (9) und IR-Sender (10) lösbar und wahlweise in einem der stirnseitigen Randbereiche (6) anordenbar ist.

7. Anordnung von Leuchten (2, 3) in einem Raum, welche nach einem der Ansprüche 1 bis 6 ausgebildet sind,
**dadurch gekennzeichnet,**
**dass** das zweite Steuersystem zur Anwesenheitssensorik mit einem Anwesenheitssensor (9) und einem IR-Sender (10) zur Ausbildung aneinander grenzender oder sich überschneidender Erfassungsbereiche (22, 23) des Anwesenheitssensors (9) wechelsseitig in den stirnseitigen Randbereichen (6) der Leuchten (2, 3) angeordnet ist.

8. Leuchte
mit einem Lichtsensor (7) zur Steuerung der Beleuchtung in Abhängigkeit vom Tageslichtanteil,
einem Funkempfänger (8) zur Steuerung der Beleuchtung mittels Fernbedienung und
einem Anwesenheitssensor (9) zum Ein- und Ausschalten der Leuchte (2, 3) bei Anwesenheit bzw. Abwesenheit einer Person,
**dadurch gekennzeichnet,**
**dass** zusätzlich ein Funksender (10) vorgesehen ist und
mit dem Anwesenheitssensor (9) in Wirkverbindung steht,
**dass** der Funksender (10) bei Personenerkennung durch den Anwesenheitssensor (9) zur Aussendung von Ein/Aus-Signalen ausgebildet ist und
**dass** durch diese Ein/Aus-Signale wenigstens eine weitere Leuchte (3) aktiviert und die Beleuchtung der Leuchten (2, 3) zusätzlich steuerbar ist.

9. Anordnung von Leuchten (2, 3) in einem Raum, welche nach Anspruch 8 ausgebildet sind,
**dadurch gekennzeichnet,**
**dass** die Leuchten (2, 3) einen längsseitigen Randbereich (5) mit einem mittig angeordneten ersten Steuersystem aus einem Lichtsensor (7) und einem Funkempfänger (8) sowie zwei stirnseitige Randbereiche (6) aufweisen und
**dass** ein zweites Steuersystem mit einem Anwesenheitssensor (9) und einem Funksender (10) wechselseitig in den stirnseitigen Randbereichen (6) der Leuchten (2, 3) angeordnet ist.
